# EUROPEAN PATENT APPLICATION

(11) **EP 3 438 446 A1**
(43) Date of publication of application: **06.02.2019**
(21) Application number: 17773833.3
(22) Date of filing: 20.02.2017
(51) Int. Cl.: F03B 13/22, F03B 7/00, F03B 13/26

(54) **WATER FLOW POWER GENERATION DEVICE**

(30) Priority: 30.03.2016 JP 2016068773
(71) Applicant: KYB Corporation, Tokyo 105-6111 (JP)
(72) Inventor: SAITOU, Yasushi, Tokyo 105-6111 (JP); NAKAJIMA, Masao, Tokyo 105-6111 (JP)
(74) Representative: Müller-Boré & Partner Patentanwälte PartG mbB
(86) International application number: PCT/JP2017/006211
(87) International publication number: WO 2017/169285

(57) **Abstract**

Providing a water current power generation system which can ease conditions under which power can be successfully generated and can expand a range in which energy can be converted. The water current power generation system (1) includes a lift type turbine (10) including a first rotator (12) which generates a lift force when subjected to a water flow and further generates a rotative force by the lift force and a drag type turbine (20) including a second rotator (22) which generates a drag force when subjected to a water flow and further generates a rotative force by the drag force. A transmission part (6) transmits the rotative force of the first rotator (12) of the lift type turbine (10) and the rotative force of the second rotator (22) of the drag type turbine (20) to a generator (4).

## Description

### Technical Field

The present invention relates to a water current power generation system.

### Background Art

Patent Document 1 discloses an example of power generation system with use of tidal current. A tidal current power generation facility disclosed by Patent Document 1 includes a floating tidal current power generation system having a turbine for power generation, an electrical generator, and a diffusion device. A mooring guide yoke is rotatably provided on a mooring anchor fixed to the sea bottom, and the tidal current power generation system is coupled to the mooring guide yoke by mooring chains.

### Prior Art Document

### Patent Documents

Patent Document 1: Japanese Patent Application Publication No. JP-A-2005-351201

### Summary of the Invention

### Problem to Be Overcome by the Invention

This type of power generation system conventionally suggested uses only a specific type of turbine, so that tidal current energy can be efficiently converted to rotative force under condition of tidal current suitable for characteristics of the turbine. However, tidal current energy cannot be efficiently converted to rotative force when tidal current is unsuitable for the characteristics of the turbine.

It is generally known that the efficiency (power factor) of a turbine is expressed as a function of a peripheral speed ratio (a ratio of peripheral speed of a blade to the flow velocity) and that the relationship between the efficiency and the peripheral speed ratio varies depending upon the shape of the blade. For example, when compared with a Darrieus type turbine, a Savonius type turbine produces a significant efficiency in a relatively lower peripheral speed ratio range. The Darrieus type turbine produces a significant efficiency in a higher peripheral speed ratio range than the Savonius type turbine.

As described above, since an efficient peripheral speed ratio range depends upon the shape of turbine, the turbine cannot be efficiently rotated under the conditions out of the efficient peripheral speed ratio range with the result that the power generation efficiency becomes low. For example, in use of the Savonius type turbine for power generation, the turbine cannot be efficiently rotated when the peripheral speed ratio is within the range unsuitable for the Savonius type turbine (the relatively higher range), with the result that the power generation efficiency becomes extremely low. Likewise, in use of the Darrieus type turbine for power generation, the turbine cannot be efficiently rotated when the peripheral speed ratio is within the range unsuitable for the Darrieus type turbine (the relatively lower range), with the result that the power generation efficiency becomes extremely low. Thus, the efficient peripheral speed ratio range is limited according to the shape of turbine, so that power cannot be successfully generated under the conditions out of the efficient peripheral speed ratio range.

The present invention was made in view of the above-described circumstances in the conventional art and has an object to provide a water current power generation system which can ease conditions under which power can be successfully generated and can expand a range in which energy can be converted.

### Means for Overcoming the Problem

A water current power generation system in accordance with the invention includes a lift type turbine provided with a first rotator which generates a lift force when subjected to a water flow and further generates a rotative force by the lift force and a drag type turbine provided with a second rotator which generates a drag force when subj ected to a water flow and further generates a rotative force by the drag force. The water current power generation system further includes a transmission part which transmits the rotative force of the first rotator of the lift type turbine and the rotative force of the second rotator of the drag type turbine to one or a plurality of generators.

The water current power generation system of the invention includes the lift type turbine and the drag type turbine and is configured to transmit the rotative forces of the first and second rotators to the generator by the transmission part. As the result of the configuration, when a relationship between the lift type turbine and the water current is suitable for the lift type turbine, the first rotator can be efficiently rotated so that the generator can be operated using at least the rotative force of the first rotator. When the relationship between the lift type turbine and the tidal current is unsuitable for the lift type turbine but the relationship between the drag type turbine and the tidal current is suitable for the drag type turbine, the second rotator can be efficiently rotated so that the generators can be operated using the rotative force of the second rotator.

According to the invention, as described above, it is possible to ease the conditions under which power can be successfully generated and to expand the range in which energy can be converted, as compared with the configuration using only a single type turbine.

In the water current power generation system in accordance with the invention, the transmission part may include a first fluid pressure pump driven in conjunction with rotation of the first rotator of the lift type turbine to cause a fluid to flow in a first flow passage and a second fluid pressure pump driven in conjunction with rotation of the second rotator of the drag type turbine to cause a fluid to flow in a second flow passage. The water current power generation system may further include a common flow passage communicating with the first and second flow passages and serving as a passage common to the fluid flowing in the first flow passage and the fluid flowing in the second flow passage and a fluid pressure motor operated in response to flowing of the fluid in the common flow passage to drive the generator.

According to the configuration, both of the rotative force of the first rotator of the lift type turbine and the rotative force of the second rotator of the drag type turbine can be converted to a rotative force of the fluid pressure motor, with the result that the fluid pressure motor can rotate the generator with higher torque. Furthermore, even when fluctuation in rotation occurs such that the rotational speed in each of the turbines is reduced to such an extent that power generation is difficult by each turbine alone, power generation can be continued as long as the fluid pressure motor reflecting the operations of both turbines is in a rotating state capable of generating electric power.

The water current power generation system in accordance with the invention may further include a first speed increasing part operated in conjunction with rotation of the first rotator of the lift type turbine to rotate a rotating part of the first fluid pressure pump at a rotational speed higher than a rotational speed of the first rotator. In the similar manner, the water current power generation system in accordance with the invention may further include a second speed increasing part operated in conjunction with rotation of the second rotator of the drag type turbine to rotate a rotating part of the second fluid pressure pump at a rotational speed higher than a rotational speed of the second rotator.

According to the configuration, the rotational speeds of the rotating parts of the first and second fluid pressure pumps can be rendered higher than higher than those of the corresponding rotators with the result that it is possible to improve the efficiencies of the first and second fluid pressure pumps.

The water current power generation system in accordance with the invention may further include a floater floatable on water. The lift type turbine may be mounted to the floater in such a manner that the first rotator is disposed in water, and the drag type turbine may be mounted to the floater in such a manner that the second rotator is disposed in water.

According to the configuration, both lift type and drag type turbines can be provided without being directly fixed to the ground with the result that the space necessary on the ground can be reduced. Moreover, the lift type and drag type turbines need not be completely fixed to the sea bottom or the land surface and the turbines can be moved together with the floater. Furthermore, even when the water level is increased or decreased, the floater is moved up or down according to the increase or decrease in the water level. Consequently, the relative positional relationship between the water level and the lift type and drag type turbines can be maintained without significant change.

The water current power generation system in accordance with the invention may further include a light source configured to emit light using electric power generated by the generator.

According to the configuration, an independent power source can be secured by use of the lift type and drag type turbines, and a system which generates light by the electric power resulting from the power source can be built.

"Water current" that gives power to the water current power generation system includes not only a flow of tidal current (tidal current) caused by sea tide but also a flow of water such as ocean current. In the following description, "tidal current" refers to a flow of water on the whole occurring in the sea. Furthermore, a place of application of the water current power generation system in accordance with the invention is not limited to the sea, but also includes places in rivers, lakes and the like where water currents can occur.

### Brief Description of the Drawings

Fig. 1 is a schematic view of the water current power generation system of an embodiment;
Fig. 2 is a front view of a lift type turbine used in the water current power generation system of the embodiment;
Fig. 3 is a perspective view of a drag type turbine used in the water current power generation system of the embodiment;
Fig. 4 is a circuit diagram of a hydraulic circuit of the water current power generation system of the embodiment; and
Fig. 5 is a schematic block diagram exemplifying an electrical arrangement of the water current power generation system of the embodiment.

### Best Mode for Carrying Out the Invention

### <Embodiment>

One embodiment of the water current power generation system in accordance with the invention will be described with reference to the drawings.

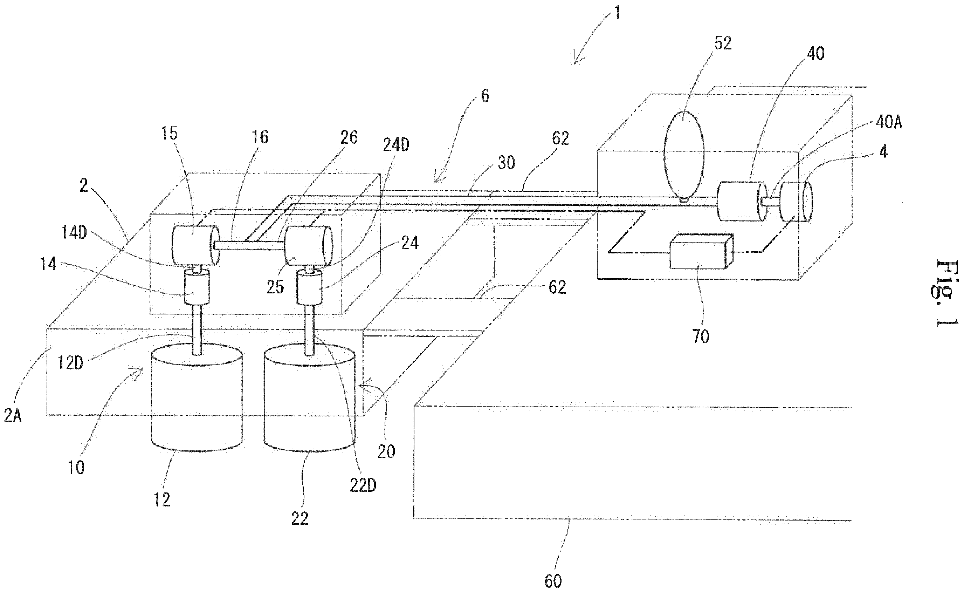

A tidal current power generation system 1 as illustrated in Fig. 1 and the like serves as an example of the water current power generation system and has a plurality of turbines (a lift type turbine 10 and a drag type turbine 20) serving as converters which converts energy of tidal current to rotation energy of a rotator and a floater 2 floating on water. The lift type turbine 10 and the drag type turbine 20 are mounted to the floater 2. Rotative force generated by the lift type turbine 10 and the drag type turbine 20 is transmitted by a transmission part 6 to an electrical generator 4, which is the driven to generate electric power.

The floater 2 is configured to float in the sea by buoyancy and used such that a part of the floater 2 is located below sea level and the rest part of the floater 2 is located above sea level. In the example as illustrated in Fig. 1, the floater 2 includes a body 2A formed into a rectangular shape in a planar view and an upper surface of the body 2A is disposed above sea level. The floater 2 maybe structured such that the body 2A itself is floatable in the water or a plurality of parts floatable in the water (floating parts) is coupled to the body 2A. A part of the transmission part 6 is mounted on the body 2A, and the lift type turbine 10 and the drag type turbine 20 are held by the body 2A. An underside of the body 2A is disposed in the water so as to be located below sea level, for example. The lift type turbine 10 includes a first rotator 12 and the drag type turbine 20 includes a second rotator 22, both of rotors 12 and 22 being disposed so as to extend downward from the underside of the body 2A.

The floater 2 is connected to a land part 60 by a bridge 62 serving as a connection. The land part 60 may be constructed as a breakwater, a pier or a quay. The floater 2 stays near the land part 60 while floating in the sea since the floater 2 is connected to the land part 60 by the bridge 62. The floater 2 may be connected to an anchor sunk on the sea bottom.

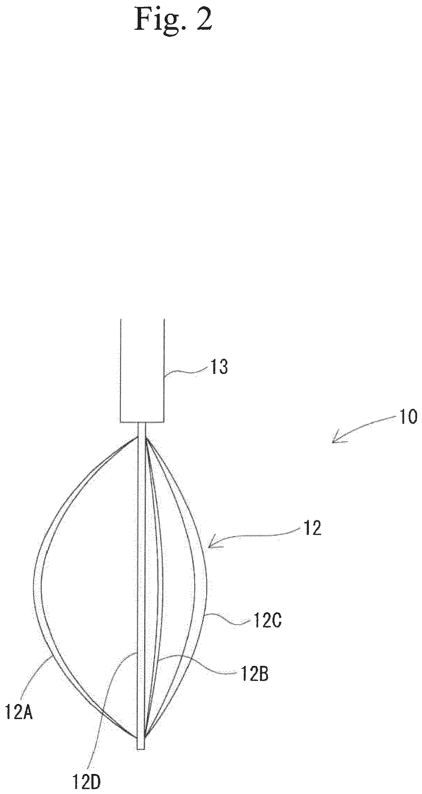

The lift type turbine 10 is constructed as a lift type vertical-axis turbine such as a Darrieus turbine, for example. Fig. 2 exemplifies the lift type turbine 10 constructed as the Darrieus turbine. The lift type turbine 10 includes the first rotator 12 which is subjected to a tidal current to generate a lift force and further generate a rotative force by the lift force, and a bearing part 13 rotatably holding a rotating shaft 12D serving as a center of rotation of the first rotator 12. The lift type turbine 10 is mounted to the floater 2 with the first rotator 12 being disposed in the water. The bearing part 13 is fixed to the body 2A of the floater 2 as illustrated in Fig. 1, for example. The first rotator 12 is mounted so as to extend downward below the underside of the body 2A to which the bearing part 13 is fixed.

The lift type turbine 10 (the Darrieus turbine) as illustrated in Fig. 2 is constructed as a three-bladed turbine having three blades 12A, 12B and 12C coupled to the rotating shaft 12D. During occurrence of tidal current (water current) in a direction intersecting an extension direction of the rotating shaft 12D, a lift force is generated by the three blades 12A-12C subjected to the tidal current, and a circumferential force is generated by the lift force in each of the blades 12A-12C. The first rotator 12 is rotated in the water by the circumferential force. The principle of rotation of the Darrieus turbine is known and accordingly will not be described in detail here.

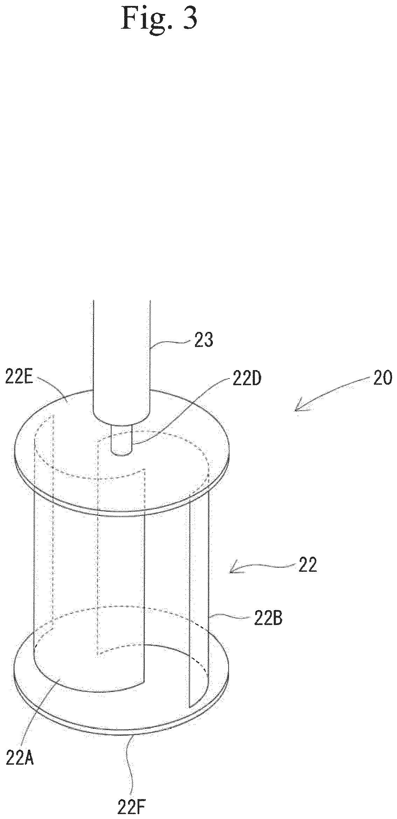

The drag type turbine 20 is constructed as a drag type vertical-axis turbine such as the Savonius turbine, for example. Fig. 3 exemplifies the drag type turbine 20 constructed as the Savonius turbine. The drag type turbine 20 includes the second rotator 22 which is subjected to a tidal current to generate a drag force and further generate a rotative force by the drag force, and a bearing part 23 rotatably supporting a rotating shaft 22D serving as a center of rotation of the second rotator 22. The drag type turbine 20 is mounted to the floater 2 with the second rotator 22 being disposed in the water. The bearing part 23 is fixed to the body 2A of the floater 2 as illustrated in Fig. 1, for example. The second rotator 22 is mounted so as to extend downward below the underside of the body 2A to which the bearing part 23 is fixed.

The drag type turbine 20 (the Savonius turbine) as illustrated in Fig. 3 includes a rotating shaft 22D, an upper support plate 22E and a lower support plate 22F both of which are coupled to the rotating shaft 22D. The drag type turbine 20 has two blades 22A and 22B coupled to the upper and lower supports 22E and 22F so that the drag type turbine 20 is constructed as a two-bladed Savonius turbine. The rotating shaft 22D has a lower end connected to a central part of the upper support plate 22E formed into the shape of a disc. The blades 22A and 22B are constituted of two semi-cylindrical members and disposed to be symmetric about a central axis (the center of rotation) of the rotating shaft 22D. The blades 22A and 22B have respective upper ends connected to the upper support plate 22E and respective lower ends connected to the lower support plate 22F. During occurrence of tidal current (water current) in a direction intersecting an extension direction of the rotating shaft 22D, a drag force is generated by the blades 22A and 22B subjected to the tidal current, and a circumferential force is generated by the drag force in each of the blades 22A and 22B. The second rotator 22 is rotated in the water by the circumferential force. The principle of rotation of the Savonius turbine is known and accordingly will not be described in detail here.

The transmission part 6 as illustrated in Fig. 1 transmits to the generator 4 a rotative force of the first rotator 12 of the lift type turbine 10 and a rotative force of the second rotator 22 of the drag type turbine 20. The transmission part 6 includes a first speed increaser 14, a second speed increaser 24, a first fluid pressure pump 15, a second fluid pressure pump 25, a first flow passage 16, a second flow passage 26, a common passage 30 and a fluid pressure motor 40.

The first speed increaser 14 serves as an example of a first speed increasing part and works in conjunction with rotation of the first rotator 12 of the lift type turbine 10 to rotate a rotating part of the first fluid pressure pump 15 at a rotational speed higher than a rotational speed of the first rotator 12. The first speed increaser 14 is constructed as a speed-up gear which increases a rotational speed by a plurality of toothed gears, for example. The rotating shaft 12D of the first rotator 12 serves as an input shaft of the first speed increaser 14. The rotating shaft 14D connected to the rotating part of the first fluid pressure pump 15 serves as an output shaft of the first speed increaser 14. The first speed increaser 14 transmits power so that a rotational speed of the rotating shaft 14D is higher than that of the rotating shaft 12D by the gear transmission mechanism working in conjunction with the rotation of the rotating shaft 12D.

The second speed increaser 24 serves as an example of a second speed increasing part and works in conjunction with rotation of the second rotator 22 of the drag type turbine 20 to rotate a rotating part of the second fluid pressure pump 25 at a rotational speed higher than a rotational speed of the second rotator 22. The second speed increaser 24 is constructed as a speed-up gear which increases a rotational speed by a plurality of toothed gears, for example. The rotating shaft 22D of the second rotator 22 serves as an input shaft of the second speed increaser 24. The rotating shaft 24D connected to the rotating part of the second fluid pressure pump 25 serves as an output shaft of the second speed increaser 24. The second speed increaser 24 transmits power so that a rotational speed of the rotating shaft 24D is higher than that of the rotating shaft 22D by the gear transmission mechanism working in conjunction with the rotation of the rotating shaft 22D.

Each of the first and second fluid pressure pumps 15 and 25 is constructed as a known hydraulic pump such as a screw pump, a vane pump, a gear pump or a plunger pump, for example, and uses oil as an operating fluid and is configured to convert rotation of the input shaft to fluid energy.

The first fluid pressure pump 15 is driven in conjunction with rotation of the first rotator 12 of the lift type turbine 10 and has a function of causing the operating fluid (hydraulic fluid) to flow in the first passage 16. The first fluid pressure pump 15 includes a first port 15A through which the hydraulic fluid flows out of the first fluid pressure pump 15, a second port 15B through which the hydraulic fluid flows into the first fluid pressure pump 15, and a rotating part (a driving part) not illustrated which is coupled to the rotating shaft 14D of the first speed increaser 14. The first fluid pressure pump 15 works in conjunction with rotation of the rotating shaft 14D of the first speed increaser 14 to rotate the rotating part (the driving part), thereby causing the hydraulic fluid to flow through the second port 15B into the first fluid pressure pump 15 and to flow through the first port 15A out of the first fluid pressure pump 15.

The second fluid pressure pump 25 is driven in conjunction with rotation of the second rotator 22 of the drag type turbine 20 and has a function of causing the operating fluid (the hydraulic fluid) to flow in the second passage 26. The second fluid pressure pump 25 includes a first port 25A through which the hydraulic fluid flows out of the second fluid pressure pump 25, a second port 25B through which the hydraulic fluid flows into the second fluid pressure pump 25, and a rotating part (a driving part) not illustrated which is coupled to the rotating shaft 24D of the second speed increaser 24. The second fluid pressure pump 25 works in conjunction with rotation of the rotating shaft 24D of the second speed increaser 24 to rotate the rotating part (the driving part), thereby causing the hydraulic fluid to flow through the second port 25B into the second fluid pressure pump 25 and to flow through the second port 25A out of the second fluid pressure pump 25.

The transmission part 6 includes a hydraulic fluid circulation passage 6A communicating with the first and second fluid pressure pumps 15 and 25. The circulation passage 6A includes a first flow passage 16 communicating with the first fluid pressure pump 15 and a second flow passage 26 communicating with the second hydraulic pump 25. The circulation passage 6A further includes a common flow passage 30 which communicates with both first and second flow passages 16 and 26 and serves as a passage common to the fluid flowing in the first flow passage 16 and the fluid flowing in the second flow passage 26. The common flow passage 30 includes a joint passage 30A where the hydraulic fluid flowing out of the first fluid pressure pump 15 and the hydraulic fluid flowing out of the second fluid pressure pump 25 join together and flow, an outflow passage 30C serving as a passage of the hydraulic fluid flowing out of the fluid pressure motor 40, and a common passage 30B serving as a common passage for the hydraulic fluid flowing out of a tank 54.

The first flow passage 16 communicating with the first fluid pressure pump 15 includes an outflow side passage 16A communicating with the first port 15A and an inflow side passage 16B communicating with the second port 15B. The outflow side passage 16A is provided with a check valve 19 which allows the hydraulic fluid to flow from the first fluid pressure pump 15 toward the joint passage 30A and blocks the reverse flow. The inflow side passage 16B is provided with a check valve 18 which allows the hydraulic fluid to flow from the common passage 30B toward the first fluid pressure pump 15 and blocks the reverse flow. In the circulation passage 6A, a circulation passage at the first fluid pressure pump 15 side is constituted of the outflow side passage 16A, the joint passage 30A, the tank 54, the common passage 30B and the inflow side passage 16B. The hydraulic fluid is circulated in this circulation passage by the drive of the first fluid pressure pump 15.

The second flow passage 26 communicating with the second fluid pressure pump 25 includes an outflow side passage 26A communicating with the first port 25A and an inflow side passage 26B communicating with the second port 25B. The outflow side passage 26A is provided with a check valve 29 which allows the hydraulic fluid to flow from the second fluid pressure pump 25 toward the joint passage 30A and blocks the reverse flow. The inflow side passage 26B is provided with a check valve 28 which allows the hydraulic fluid to flow from the common passage 30B toward the second fluid pressure pump 25 and blocks the reverse flow. In the circulation passage 6A, a circulation passage at the second fluid pressure pump 25 side is constituted of the outflow side passage 26A, the joint passage 30A, the tank 54, the common passage 30B and the inflow side passage 26B. The hydraulic fluid is circulated in this circulation passage by the drive of the second fluid pressure pump 25.

When both first and second fluid pressure pumps 15 and 25 are being driven, the hydraulic fluid from the tank 54 is caused to flow into the second port 15B of the first fluid pressure pump 15 and the second port 25B of the second fluid pressure pump 25. Then, the hydraulic fluid flowing out of the first port 15A of the first fluid pressure pump 15 and the hydraulic fluid flowing out of the first port 25A of the second fluid pressure pump 25 join together in the joint passage 30A and flow in the joint passage 30A.

The circulation passage 6A is provided with a branch passage 32 branching off from the joint passage 30A and a pressure relief valve 34 interposed in the branch passage 32. The pressure relief valve 34 has an inlet port 34A communicating with one of two sides of the branch passage 32 and an outlet port 34B communicating with the other side of the branch passage 32. When pressure of the hydraulic fluid at the inlet port 34A side exceeds a predetermined pressure, the pressure relief valve 34 causes the hydraulic fluid to flow from the outlet port 34B side toward the tank 54. In this case, the hydraulic fluid flows from the joint passage 30A through the branch passage 32 to the tank 54 side. Furthermore, the joint passage 30A is provided with a hydraulic accumulator 52 for suppression of impact pressure and damping of pulsation.

The fluid pressure motor 40 is constructed as a hydraulic motor with a known structure, such as a hydraulic gear motor, a vane motor or a plunger motor and is provided so as to be interposed in the common flow passage 30 constituting the circulation passage 6A. The fluid pressure motor 40 has an inlet port 41 connected to the joint passage 30A, so that the hydraulic fluid flowing through the joint passage 30A further flows through the inlet port 41 to the fluid pressure motor 40. The fluid pressure motor 40 also has an outlet port 42 connected to the outflow passage 30C. The hydraulic fluid flowing out through the outlet port 42 further flows through the outflow passage 30C into the tank 54. The fluid pressure motor 40 thus constructed is operated in response to flowing of the hydraulic fluid in the common passage 30 from the joint passage 30A to the outflow passage 30C, so that a rotating shaft 40A (Fig. 1) is rotated.

The generator 4 generates electric power by the drive of the fluid pressure motor 40 and is constructed as a known DC or AC generator, for example. The generator 4 includes a rotating shaft (not illustrated) directly connected to the rotating shaft 40A of the fluid pressure motor 40. Consequently, when the hydraulic fluid flows in the common passage 30 so that the rotating shaft 40A is rotated, the rotating shaft of the generator 4 is also rotated in conjunction with the rotating shaft 40A, with the result that the generator 4 generates electric power by the rotation of the rotating shaft thereof.

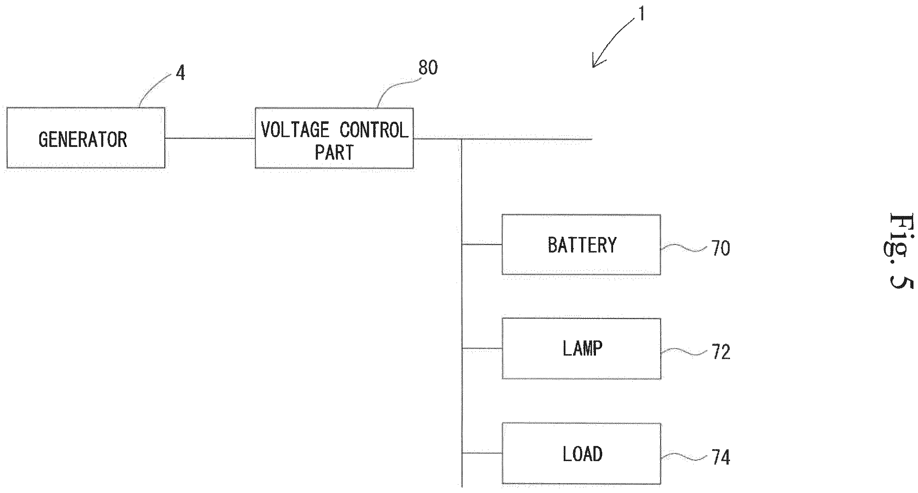

Fig. 5 schematically illustrates an electrical arrangement of the tidal current generation system 1. Upon start of generation by the generator 4, electric power delivered from the generator 4 is supplied to a voltage conversion part 80 thereby to be converted to a desired output voltage. For example, when the generator 4 is an AC generator, the voltage conversion part 80 may be constructed as a converter which converts an AC voltage generated by the generator 4 to a desired DC voltage. In this case, a battery 70 is charged with the output voltage (DC voltage) from the voltage conversion part 80.

In the arrangement of Fig. 5, an electric lamp 72 serving as a light source is electrically connected to the battery 70, so that the electric lamp 72 is operated by the electric power from the battery 70 thereby to emit light. Another load 74 is also connected to the battery 70.

Although an example of electrical arrangement of the tidal current power generation system 1 is schematically illustrated in Fig. 5, another arrangement may be employed. The tidal current power generation system 1 may be constructed as equipment which can perform system connection. For example, when the generator 4 is constructed as an AC generator, the voltage conversion part 80 may be constructed as an AC/DC converter, and being connected to this, a DC/AC converter, a transformer, a system connection protection device may be sequentially provided so that the system connection may be performed in a DC link configuration. In this case, a load constituted as AC equipment may be connected to a rear stage of the transformer.

Next, a power generating operation of the tidal current power generation system 1 will be described.

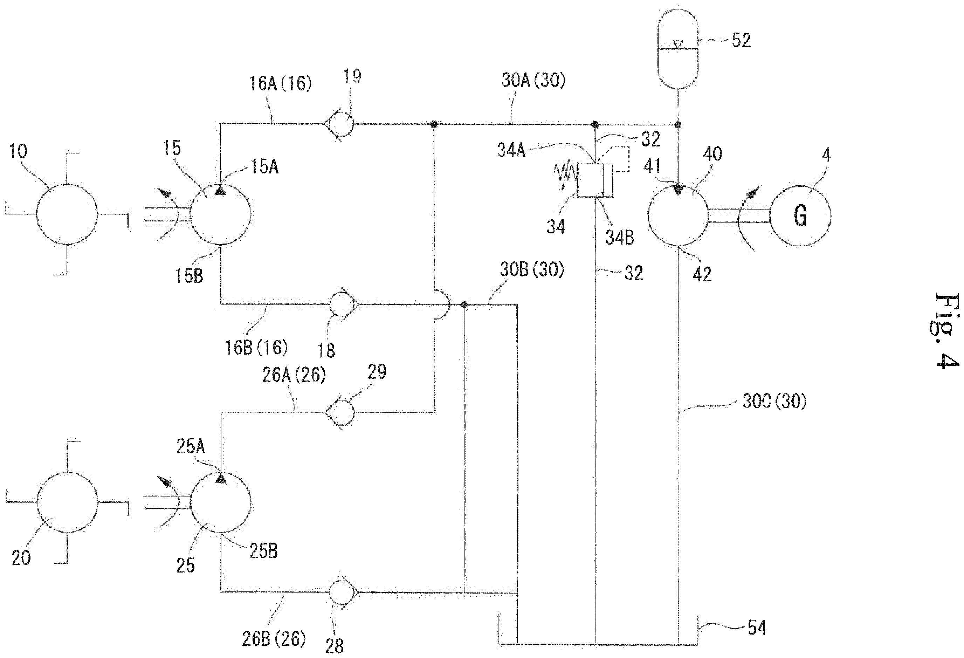

In the tidal current power generation system 1 as illustrated in Fig. 1, when flow of water occurs near the lift type turbine 10 and the drag type turbine 20 both disposed in the sea, a rotational force can be generated in the first rotator 12 of the lift type turbine 10 and the second rotator 22 of the drag type turbine 20. For example, when both of the first and second rotators 12 and 22 are rotated, the rotating shafts 14D and 24D of the first and second speed increasers 14 and 24 respectively connected to the first and second rotators 12 and 22 are rotated. The first and second fluid pressure pumps 15 and 25 are driven in conjunction with the rotation of the rotating shafts 14D and 24D. The hydraulic fluid is then caused to flow out through the first ports 15A and 25A of the first and second fluid pressure pumps 15 and 25 as illustrated in Fig. 4. The hydraulic fluid from the first port 15A and the hydraulic fluid from the first port 25A join together in the joint passage 30A and flow toward the fluid pressure motor 40. The hydraulic fluid having flowed through the joint passage 30A flows through the inlet port 41 into the fluid pressure motor 40. The hydraulic fluid having flowed into the fluid pressure motor 40 flows in a predetermined direction in the fluid pressure motor 40. The fluid pressure motor 40 is subjected to a force from the hydraulic fluid thus flowing, with the result that the fluid pressure motor 40 is driven so that the rotating shaft 40A (Fig. 1) is rotated in one direction. The hydraulic fluid having passed through the fluid pressure motor 40 flows through the outlet port 42 out of the fluid pressure motor 40 and flows through the outflow passage 30C into the tank 54. When flowing out of the first and second fluid pressure pumps 15 and 25 through the respective first ports 15A and 25A, the hydraulic fluid flows from the tank 54 through the common passage 30B. The hydraulic fluid is then caused to diverge by the inflow side passages 16B and 26B thereby to be supplied to the first and second fluid pressure pumps 15 and 25.

As described above, the first and second fluid pressure pumps 15 and 25 are driven when the lift type turbine 10 and the drag type turbine 20 are rotated by use of water flow energy. By the drive of the first and second fluid pressure pumps 15 and 25, the hydraulic fluid is circulated in the circulation passage 6A which is constituted of the outflow passages 16A and 26A, the joint passage 30A, the outflow passage 30C, the tank 54, the common passage 30B and the inflow side passages 16B and 26B. As the result of the circulation of the hydraulic fluid in the circulation passage 6A, the fluid pressure motor 40 is continuously driven and accordingly the rotating shaft 40A of the fluid pressure motor 40 is continuously rotated. Since the rotating shaft of the generator 4 is rotated with rotation of the rotating shaft 40A of the fluid pressure motor 40, the generator 4 generates electric power.

Furthermore, when the first rotator 12 of the lift type turbine 10 is not rotated due to the condition of water current but the second rotator 22 of the drag type turbine 20 is being rotated, the second fluid pressure pump 25 performs a discharging operation so that the hydraulic fluid is circulated in the circulation passage 6A, with the result that the fluid pressure motor 40 and the generator 4 are driven. In the same manner, when the second rotator 22 of the drag type turbine 20 is not rotated due to the condition of water current but the first rotator 12 of the lift type turbine 10 is being rotated, the first fluid pressure pump 15 performs a discharging operation so that the hydraulic fluid is circulated in the circulation passage 6A, with the result that the fluid pressure motor 40 and the generator 4 are driven.

As described above, the tidal current power generation system 1 includes the lift type turbine 10 and the drag type turbine 20 and is configured so that rotative forces of the first and second rotators 12 and 22 respectively provided on the turbines 10 and 20 are transmitted to the generator 4 by the transmission part 6. As the result of this configuration, when the relationship between the lift type turbine 10 and the tidal current is suitable for the lift type turbine 10, the first rotator 12 can be efficiently rotated so that the generator 4 can be operated using at least the rotative force of the first rotator 12. When the relationship between the lift type turbine 10 and the tidal current is unsuitable for the lift type turbine 10 but the relationship between the drag type turbine 20 and the tidal current is suitable for the drag type turbine 20, the second rotator 22 can be efficiently rotated so that the generator 4 can be operated using the rotative force of the second rotator 22.

Thus, as compared with a configuration using only a single type turbine, the rotator can be more efficiently rotated in the above-described configuration, with the result that it is possible to ease the conditions under which electric power can be successfully generated and to expand the range in which energy can be converted.

The transmission part 6 of the tidal current power generation system 1 includes the first fluid pressure pump 15 driven in conjunction with rotation of the first rotator 12 of the lift type turbine 10 and the second fluid pressure pump 25 driven in conjunction with rotation of the second rotator 22 of the drag type turbine 20. The first fluid pressure pump 15 is configured to cause the fluid to flow in the first passage 16, and the second fluid pressure pump 25 is configured to cause the fluid to flow in the second passage 26. The common flow passage 30 is provided which communicates with first and second flow passages 16 and 26. The common flow passage 30 serves as a passage common to the fluid flowing in the first flow passage 16 and the fluid flowing in the second flow passage 26. The fluid pressure motor 40 is operated in response to flowing of the fluid in the common flow passage 30 to drive the generator 4.

According to this configuration, both of the rotative force of the first rotator 12 of the lift type turbine 10 and the rotative force of the second rotator 22 of the drag type turbine 20 can be converted to the rotative force of the fluid pressure motor 40, with the result that the fluid pressure motor 40 can rotate the generator 4 with higher torque. Furthermore, even when fluctuation in rotation occurs such that the rotational speed in each of the turbines is reduced to such an extent that power generation is difficult by each turbine alone, power generation can be continued as long as the fluid pressure motor 40 reflecting the operations of both turbines is in a rotating state capable of generating electric power.

In the tidal current power generation system 1, the flow rate of hydraulic fluid flowing into the fluid pressure motor 40 can be averaged even when rotations of the turbines (the lift type turbine 10 and the drag type turbine 20) are not constant and the flow rates of the hydraulic fluid discharged from the respective first and second fluid pressure pumps 15 and 25 fluctuate. As a result, the fluid pressure motor 40 can be stably rotated and the generator 4 can stably generate electric power.

The tidal current power generation system 1 is configured so that the single fluid pressure motor 40 and the single generator 4 are driven by a plurality of turbines (the lift type turbine 10 and the drag type turbine 20) . As a result, capacities of the hydraulic motor and the generator can be rendered larger as compared with the case where a plurality of hydraulic motors and a plurality of generators are provided so as to correspond to the respective turbines. Furthermore, the costs of the equipment can be reduced.

The tidal current power generation system 1 includes the first and second speed increasers 14 and 24. The first speed increaser 14 works in conjunction with rotation of the first rotator 12 of the lift type turbine 10 to rotate the rotation part of the first fluid pressure pump 15 at the rotational speed higher than that of the first rotator 12. The second speed increaser 24 works in conjunction with rotation of the second rotator 22 to rotate the rotation part of the second fluid pressure pump 25 at the rotational speed higher than that of the second rotator 22. According to this configuration, the rotational speeds of the rotation parts of the first and second fluid pressure pumps 15 and 25 can be rendered higher than the rotational speeds of the corresponding rotators, with the result that it is possible to improve the efficiencies of the first and second fluid pressure pumps 15 and 25.

The tidal current power generation system 1 includes the floater 2 floating on water. The lift type turbine 10 is mounted to the floater 2 in such a manner that the first rotator 12 is disposed in the water, and the drag type turbine 20 is mounted to the floater 2 in such a manner that the second rotator 22 is disposed in the water. According to this construction, both lift type and drag type turbines can be provided without being directly fixed to the ground with the result that the space necessary on the ground can be reduced. Moreover, the lift type and drag type turbines 10 and 20 need not be completely fixed to the sea bottom or the land surface and the turbines can be moved together with the floater. Furthermore, even when the water level is increased or decreased, the floater 2 is moved up or down according to the increase or decrease in the water level. Consequently, the relative positional relationship between the water level and the lift type and the drag type turbines can be maintained without significant change.

The tidal current power generation system 1 includes the lamp 72 configured to emit light using the electric power generated by the generator 4. According to this configuration, an independent power source can be secured by sued of the lift type and drag type turbines 10 and 20, and a system which generates light by the electric power resulting from the power source can be built.

The present invention should not be limited to the embodiments described above with reference to the drawings, but the technical scope of the invention encompasses the following embodiments, for example.
(1) Although the tidal current power generation system 1 of the embodiment uses the lift type vertical axis turbine as the example of lift type turbine, a lift type horizontal axis turbine such as a propeller type turbine may be used instead. Furthermore, although the tidal current power generation system 1 uses the drag type vertical axis turbine as the example of drag type turbine, a drag type horizontal axis turbine may be used instead.
(2) Although the tidal current power generation system 1 uses the Darrieus type turbine as the example of lift type vertical axis turbine, another lift type vertical axis turbine such as a gyromill type turbine or a straight-wing type turbine may be used instead. Furthermore, although the tidal current power generation system 1 uses the Savonius type turbine as the example of drag type vertical axis turbine, another drag type vertical axis turbine such as a cross flow type turbine may be used instead.
(3) Although one lift type turbine and one drag type turbine are provided in the tidal current power generation system 1 of the embodiment, a plurality of one or both of types of turbines may be provided instead.
(4) Although one type of lift type turbine is provided in the tidal current power generation system 1 of the embodiment, a plurality of types of lift type turbines may be provided instead. Furthermore, although one type of drag type turbine is provided in the tidal current power generation system 1 of the embodiment, a plurality of types of drag type turbines may be provided instead.
(5) The transmission part 6 is provided in the tidal current power generation system 1 of the embodiment to transmit to the single power generator 4 the rotative force of the first rotator 12 of the lift type turbine 10 and the rotative force of the second rotator 22 of the drag type turbine 20. However, the configuration should not be limited to this. For example, the tidal current power generator may be configured so that the rotative force of the first rotator of the lift type turbine is transmitted to a first generator by a first transmission structure (a first hydraulic circuit, for example) . In the same manner, the rotative force of the second rotator of the drag type turbine may be transmitted by a second transmission structure (a second hydraulic circuit, for example) to a second generator differing from the first generator.
(6) The tidal current power generation system 1 of the embodiment is configured so that the rotative force of the first rotator 12 of the lift type turbine 10 and the rotative force of the second rotator 22 of the drag type turbine 20 are transmitted via the hydraulic circuit to the generator 4. However, rotative force may be transmitted to one or a plurality of generators by a gear mechanism not via the hydraulic circuit.
(7) Although the lamp 72 is exemplified as the electric device operated using the electric power generated by the tidal current power generation system 1 in the foregoing embodiment, an electric device other than the lamp (a display device, for example) may be operated.
(8) Although the first and second speed increasers are each constructed as a speed-up gear in the foregoing embodiment, any configuration other than a speed-up gear may be provided as long as it increases the speed so that the rotational speed of the output shaft is higher than the rotational speed of the input shaft. For example, each of the first and second speed increasers may be constructed as a speed-up mechanism using a V-belt and pulley, and a chain and sprocket.

### Explanation of Reference Symbols

1 ... tidal current power generation system (water current power generation system), 2 ... floater, 4 ... generator, 6 ... transmission part, 10 ... lift type turbine, 12 ... first rotator, 14 ... first speed increaser (first speed increasing part), 15 ... first fluid pressure pump, 16 ... first flow passage, 20 ... drag type turbine, 22 ... second rotator, 24 ... second speed increaser (second speed increasing part), 25 ... second fluid pressure pump, 26 ... second flow passage, 30 ... common flow passage, 40 ... fluid pressure motor, and 72 ... lamp (light source) .

## Claims

1. A water current power generation system comprising:
a lift type turbine provided with a first rotator which generates a lift force when subjected to a water flow and further generates a rotative force by the lift force;
a drag type turbine provided with a second rotator which generates a drag force when subjected to a water flow and further generates a rotative force by the drag force;
one or a plurality of generators; and
a transmission part which transmits the rotative force of the first rotator of the lift type turbine and the rotative force of the second rotator of the drag type turbine to the generator or generators.

2. The water current power generation system according to claim 1, wherein the transmission part includes:
a first fluid pressure pump driven in conjunction with rotation of the first rotator of the lift type turbine to cause a fluid to flow in a first flow passage;
a second fluid pressure pump driven in conjunction with rotation of the second rotator of the drag type turbine to cause a fluid to flow in a second flow passage;
a common flow passage communicating with the first and second flow passages and serving as a passage common to the fluid flowing in the first flow passage and the fluid flowing in the second flow passage; and
a fluid pressure motor operated in response to flowing of the fluid in the common flow passage to drive the generator or generators.

3. The water current power generation system according to claim 2, further comprising:
a first speed increasing part operated in conjunction with rotation of the first rotator of the lift type turbine to rotate a rotating part of the first fluid pressure pump at a rotational speed higher than a rotational speed of the first rotator; and
a second speed increasing part operated in conjunction with rotation of the second rotator of the drag type turbine to rotate a rotating part of the second fluid pressure pump at a rotational speed higher than a rotational speed of the second rotator.

4. The water current power generation system according to any one of claims 1 to 3, further comprising a floater floatable on water,
wherein the lift type turbine is mounted to the floater in such a manner that the first rotator is disposed in water; and
wherein the drag type turbine is mounted to the floater in such a manner that the second rotator is disposed in water.

5. The water current power generation system according to any one of claims 1 to 3, further comprising a light source configured to emit light using electric power generated by the generator or generators.

6. The water current power generation system according to claim 4, further comprising a light source configured to emit light using electric power generated by the generator or generators.
